# EUROPEAN PATENT SPECIFICATION

(11) **EP 0 810 355 B1**
(45) Date of publication and mention of the grant of the patent: **13.12.2000**
(21) Application number: 97830252.9
(22) Date of filing: 28.05.1997
(51) Int. Cl.: F02B 63/06, F04C 29/00, B60T 17/02

(54) **Vacuum pump assembly for internal combustion engines**
Vakuumpumpezusammenbau für Brennkraftmaschinen
Assemblage de pompe à vide pour des moteurs à combustion interne

(30) Priority: 31.05.1996 IT BO960296
(43) Date of publication of application: 03.12.1997
(73) Proprietor: VM MOTORI S.P.A., I-44042 Cento (Ferrara) (IT)
(72) Inventor: Ferioli, Vilmo, 44042 Cento (Ferrara) (IT); Mingozzi, Mario, 40010 San Matteo Della Decima (Bologna) (IT)
(74) Representative: Lanzoni, Luciano

(56) References cited:
- EP-A- 0 085 116
- EP-A- 0 515 929
- DE-A- 3 101 394
- DE-A- 3 119 230

## Description

The present invention relates to a vacuum pump assembly for internal combustion engines, particularly diesel engines.

The term "vacuum pump assembly" commonly refers to a device that is able continuously to generate a vacuum that is maintained inside a plenum chamber to which are connected systems requiring a negative relative pressure value, such as in particular the braking system of modern automobiles.

For this purpose, a generalised solution consists of connecting to the engine's kinematic chain, particularly between the drive shaft and the camshaft, a rotating unit able to generate a vacuum, in practice a bladed rotor driven by an idle gear meshed between two gears splined respectively to the crankshaft and to the camshaft. In practice, the need for the presence of this idle gear is exploited - since the transmission ratio between the two shafts needs to be halved - to spline the aforesaid vacuum device to the idle gear.

Normally, the idle gear, which constitutes the driving gear of the vacuum rotor, is located on the outside of the engine block together with the remaining gears, while the vacuum unit is located inside the aforesaid engine block, normally positioned in a related seat opened to the outside: this is done for ease of assembly and maintenance or replacement of the vacuum rotor itself.

Up to now, this solution amply met the need for the "vacuum" capacities necessary for the operation the services connected thereto. It should be noted that the dimensions of the rotor device, along with its number of rotations per minute (obviously equal to the number of rotations of the idle gear driving the rotor), allowed for a well defined minimum capacity: oftentimes, with current needs for vacuum capacities (we are referring specifically to the case of a requirement for high capacities, such as the repeated use of the braking system going downhill, thus under conditions of minimum engine rotations per minute), a lack of sufficient capacity was evidenced, along with the failure by the connected service to operate within the required safety terms.

In the attempt to overcome this drawback, manufacturing companies have attempted different solutions, all aimed, however, at positioning the vacuum-rotor unit separately from the engine block and connecting it kinematically thereto by means of a different drive (such as with belts) able to multiply the rotation rate, and thus the capacity, of the rotor.

One solution entails associating the vacuum pump with the alternator, but in so doing the unit itself was moved to different locations from those envisioned initially, thus also requiring external connections for the intake and outlet ports of an auxiliary lubrication system for the rotor: this implied the use of auxiliary ducts connecting, in both directions, the vacuum assembly with the engine block. This negatively affected primarily the safety of the entire system, since a possible belt drive breakage would bring about a lack of vacuum capacity, thereby causing a "black out" in the braking system in a very short period of time, and secondarily the final costs of the design.

The purpose of the present invention is therefore to design a vacuum pump assembly which essentially uses the standard components introduced up to now, hence requiring no particular modifications to the engine block, and thanks to which a markedly greater capacity can be attained (thereby also enhancing safety in services usage), and lastly which would constitute an assembly of reduced mechanical size and with absolute operating reliability over time: all with highly contained costs. The technical characteristics of the invention, according to the aforesaid purposes, can clearly be seen from the content of the claims reported below and its advantages shall be made more evident in the description that follows, made with reference to the enclosed drawings, which show an embodiment provided purely by way of non limiting example, in which:
- Figure 1 shows one part of an internal combustion engine provided with a vacuum pump assembly constituting the object of the present invention, in a schematic side view with some parts removed the better to highlight others;
- Figure 2 shows a II - II section as per Figure 1;
- Figure 3 shows a support body forming part of the vacuum pump group as per the previous figures, in particular it is a view from A with respect to Figure 2 and with some parts removed the better to highlight others;
- Figure 4 shows the support body as per Figure 3, but in a view from B with respect to Figure 3 and with some parts removed the better to highlight others;
- Figure 5 shows a section V - V as per Figure 4;
- Figure 6 shows an additional element forming part of the vacuum pump assembly as per the previous figures, and in particular the front view of a retaining plate;
- Figure 7 shows the subject vacuum pump group in a prospective view with some parts in exploded view.

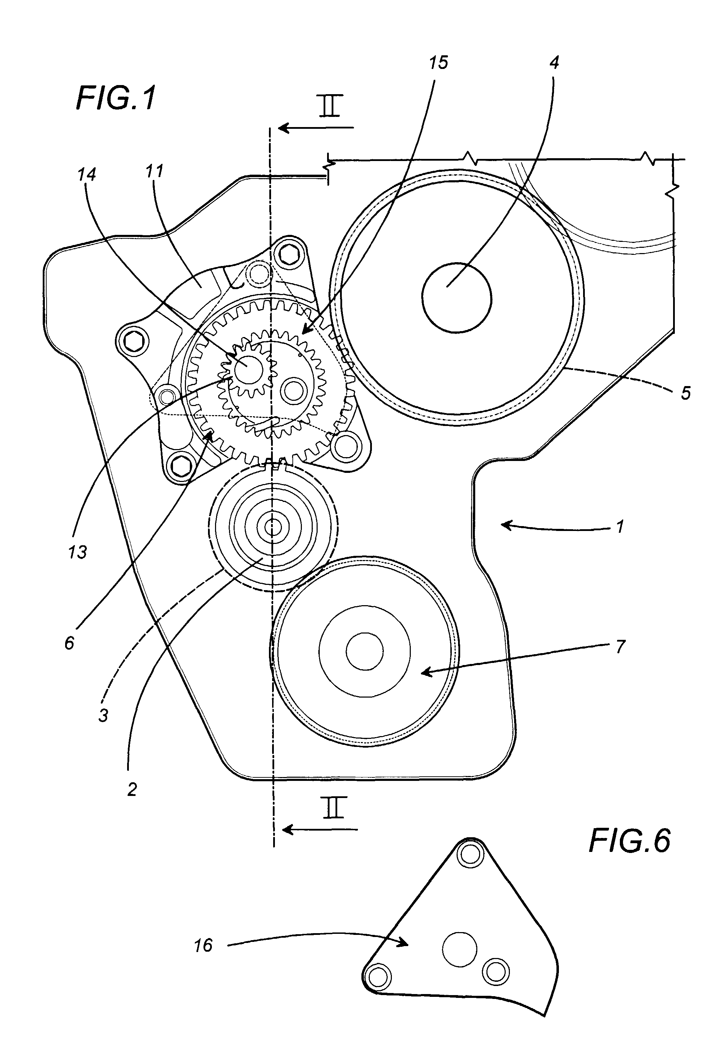

According to the figures of the attached drawings, and with particular reference to Figure 1, the subject vacuum pump group is applied to internal combustion engines, be they diesel cycle or gasoline cycle for motor vehicles, without thereby departing from the inventive concept.

These engines comprise a hermetically sealed engine block 1 (only partially shown in the portion of interest to the present text), inside which is fitted a drive shaft 2 able to drive primary means (such as connecting rods, not shown herein) and provided with a first gear wheel 3 splined onto the shaft itself. Above drive shaft 2 (looking at Figure 1) is fitted a camshaft 4, arranged parallel to the drive shaft 2, and able to drive in phase a plurality of cams commanding valves (also not shown as they are not part of the invention), and provided at one of its ends with a second gear wheel 5 splined onto the camshaft itself. The figures obviously do not show additional elements applied to the two shafts 2 and 4, as they are of a known type and not strictly necessary for the purposes of this description.

Underneath the aforesaid drive shaft 2 are provided means 7 for distributing lubricating fluid (usually oil) within the whole engine block 1; such means 7 preferably comprise a distribution pump driven by the drive shaft 2.

To transfer motion between the drive shaft 2 and the camshaft 4, motion transmission means 6 are provided, which comprise also a vacuum generating unit 15 used to activate the auxiliary services of the motor vehicle requiring this negative relative pressure value, such as the braking system of the motor vehicles.

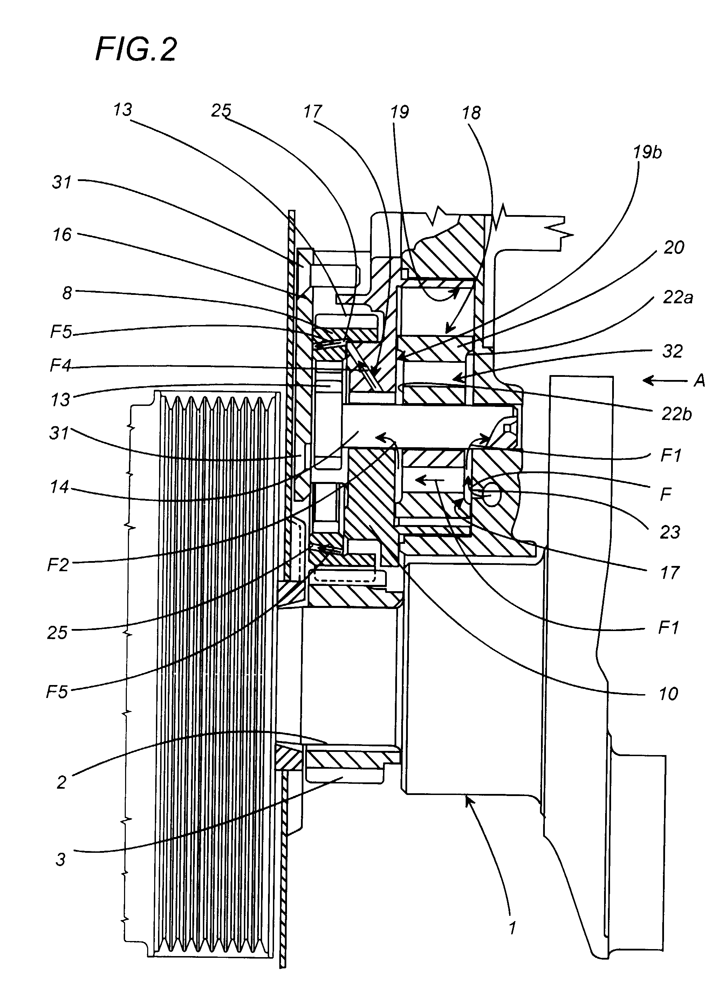

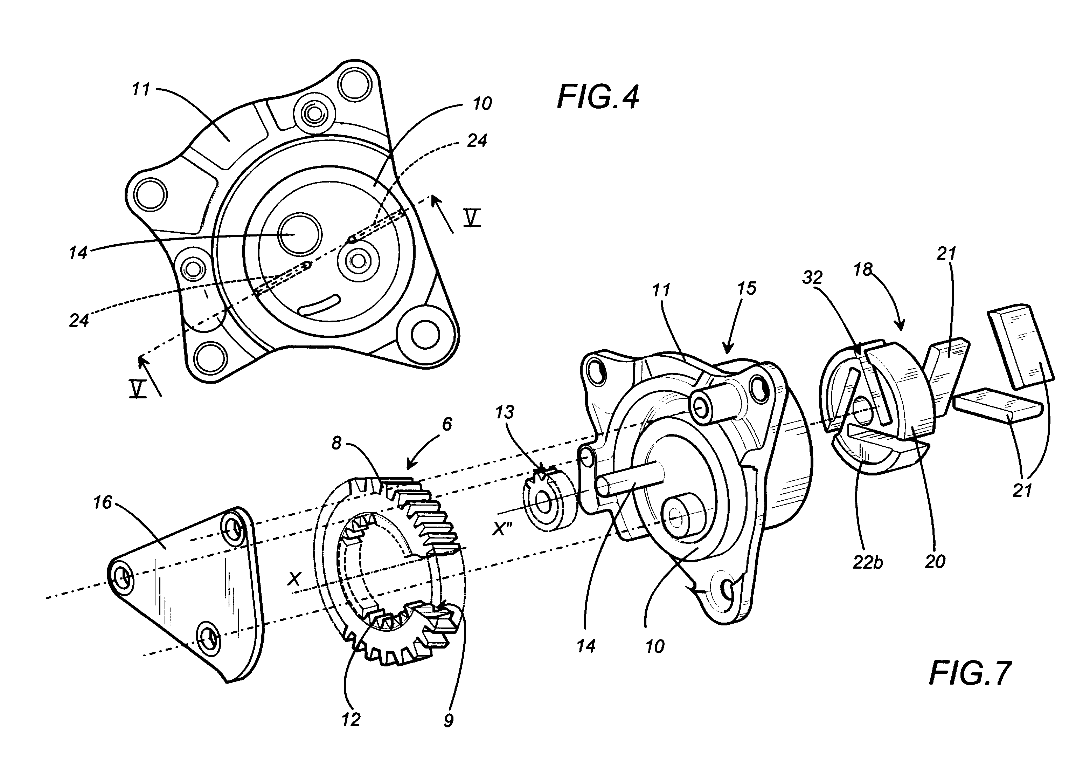

These motion transmission means 6 (see also Figures 2 and 7) essentially comprise a third gear wheel 8, a support body 11 of the third wheel, a fourth gear wheel 13 driving the aforesaid vacuum generating unit 15 fitted within the body 11, a retaining plate 16 and means 17 for distributing the aforesaid lubricating fluid.

More in detail (again see Figures 2 and 7), the third gear wheel 8 is a transmission gear wheel, as it is interposed between and meshed with the first and the second gear wheel 3 and 5, so as to transmit motion between the two aforesaid shafts 2 and 4.

The third wheel 8 presents its inner surface subdivided, along an axis parallel to its first axis of rotation X, in two distinct portions: one which defines a shoulder rotating supported by a corresponding protruding round surface 10 presented by the aforesaid support body 11 (see also Figure 4), whilst the other one comprises an inner toothing 12 which meshes with the aforesaid fourth gear wheel 13.

This fourth gear wheel 13 is splined onto an end of a shaft 14, axially passing through the aforesaid support body 11, and connected at its other end to the aforesaid vacuum generating unit 15.

The vacuum generating unit 15 comprises a rotor 18 splined to the through shaft 14, and inserted into a chamber 19 obtained from a protruding cylindrical portion of the support body 11 with centre X' offset with respect to the aforesaid axis X of rotation of said third gear wheel 8; this rotor 18 comprises a cylindrical body 20 fitted with a plurality of blades 21 which, moved around a second axis X", allow to generate the vacuum which is used by the aforesaid auxiliary services through an opening 30 on the aforesaid chamber 19 (see Figure 5).

Observing Figures 1, 2 and 6, the aforesaid plate 16 allows to retain the third wheel 8 on the body 11, since it is fitted opposite to the free outer surface 8a of the third wheel itself, and it can be joined to the body itself, by means of screws 31, so as to define a retaining wall.

The plate 16, as can be clearly seen in Figures 2 and 6, presents a reduced thickness and an essentially triangular perimeter, and is shaped so as to cover a portion of toothed arc of the third gear 8 to provide an efficient contrast to the axial stresses the wheel 8 itself is subjected to, in order to avoid the meshing areas between the third wheel itself and the first and second gear wheel 3 and 5.

The aforesaid means 17 for the passage of lubricating fluid are obtained on the support body 11, on the third wheel 8 and on the aforesaid vacuum generating unit 15 to obtain the continuous inflow of the lubricating fluid with a flow that starts from the part of the body 11 where the vacuum generating unit 15 is fitted and reaches the third wheel 8.

For this purpose, such means 17 are subdivided into various sections obtained on the aforementioned elements: starting from the area where the lubricant is fed, the cylindrical body 20 of the rotor 18 is provided, on its own base surfaces, with a respective circumferential indentation 22a and 22b for lubricant passage, and where the indentation 22a provided on the innermost surface of cylindrical body is connected to a duct 23 supplying the lubricating fluid (see arrow F in Figure 2) coming from the exterior of the support body 11, fed by the means 7 for distributing the lubricating fluid itself.

The incoming lubricant splits in multiple directions after entering the cylindrical chamber 19 (see arrows F1 in Figure 2) going to lubricate the outermost part of the shaft 14 and, crossing through the cylindrical body 20 in correspondence with seats 32 for coupling with the blades 21, reach the other indentation 22b where the lubricant can flow again through the shaft 14 (see arrow F2) or enter a plurality of first ducts 24 whose intake port L is obtained on the base 19b of the cylindrical chamber 19 (see arrow F3 of Figures 2 and 5).

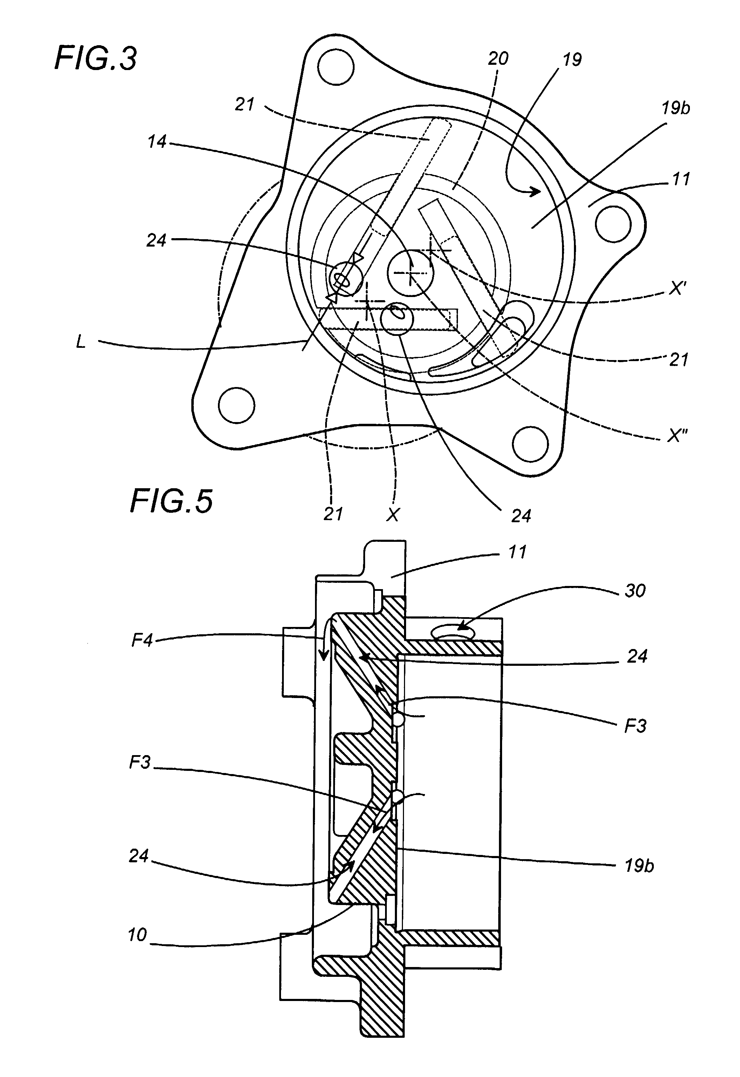

These first ducts 24 extend from the base 19b to the aforesaid surface 10 supporting the third wheel 8 so as to obtain a direct passage of the lubricant coming from the cylindrical chamber 19. It should be noted that the first ducts 24 are fitted onto the base 19b (see Figure 3) in such a way as to be always free to collect the incoming lubricant regardless of the position ofthe blades 21 of the rotor 18 as it rotates; changing the position of the first ducts 24, alternatively, one operates on the value of the aforesaid intake port L also of the first ducts 24 so they are always free to collect the lubricant.

The aforesaid first ducts 24 extend within the support body 11 starting, as stated, from the base 19b and ending outside the support body 11 itself in correspondence with the aforesaid support surface 10. The lubricant then flows (see arrow F4 in figures 2 and 5) onto surface 10 and in correspondence with its bevelled corner area to distribute said lubricant on at least two directions forming essentially a right angle.

The lubricant flowing out of the first ducts 24 is also collected by a plurality of second ducts 25 uniformly obtained on the third gear wheel 8 in correspondence with its inner circumference, which second ducts 25 extend from the aforesaid shoulder 9 to the opposite surface (see arrow F5 in Figure 2), set opposed said retaining plate 16, so as to distribute the lubricant even to the remotest area of the vacuum pump unit.

Such a solution thus provides a vacuum pump unit with multiple advantages:
- the support structure of the third transmission wheel, comprising a retaining wall obtained both on the support body and on the retaining plate of the third wheel itself, allows to eliminate any rolling element (such as bushings or bearings) for the the wheel itself, making the structure lighter and more economical;
- the retaining plate is suitably shaped to optimise also the outflow of the lubricant arriving from the various ducts and is fastened to the support body so as to obtain a cell structure such as to make the system extremely rigid and enable it to resist the stresses the assembly needs to undergo, in particular radial ones;
- the lubricant passage system is accomplished in an extremely practical manner and such as to distribute the lubricant itself to all the moving parts of the assembly, guaranteeing its perfect operation;
- the epicycloidal connection between the third and the fourth wheel allows to vary transmission ratios according to the design requirements of the engine with no modification to the support box.

All these elements therefore attain the goal described above and allow to obtain a vacuum assembly of extremely reduced size, with easy access to all elements present and a reduced final production cost.

The invention thus conceived can be subject to numerous modifications and variations, without thereby departing from the scope of the inventive concept. Moreover, all components may be replaced with technically equivalent elements.

## Claims

1. Vacuum pump assembly for internal combustion engines comprising among other components, within a hermetically sealed engine block (1), a drive shaft (2) fitted with at least a first gear wheel (3) splined to the shaft itself, a camshaft (4) arranged parallel to said drive shaft (3) and fitted with at least a second gear wheel (5) splined to the camshaft itself, and means (6) for transmitting motion from said drive shaft (2) to said camshaft (4) comprising a vacuum generating unit (15); means (7) for distributing lubricating fluid being provided within said engine block (1), characterised in that said motion transmission means (6) comprise:
- a third transmission gear wheel (8) interposed between and meshed with said first and second gear wheel (3, 5), said third wheel (8) having its inner surface subdivided, along an axis parallel to its own axis of rotation (X), in two distinct portions, of which one defining a shoulder (9) rotating supported by a corresponding round surface (10) protruding from a body (11) providing support and partial housing to the third wheel itself, and the other one providing an inner toothing (12) meshing with
- a fourth gear wheel (13) splined to an end of a shaft (14) passing through said supporting body (11), and connected at its other end to said vacuum generating unit (15);
- a plate (16) retaining said third wheel (8) on said body (11), set opposite to the free outer surface (8a) of said third wheel (8), and fastenable to the body itself to define a wall for the partial closure of the body, and
- means (17) for the passage of said lubricating fluid obtained at least on said support body (11), on said third wheel (8) and on said vacuum generating unit (15), and able to allow the continuous flow of said lubricating fluid from said body (11) where said vacuum generating unit (15) is fitted towards said third wheel (8).

2. Assembly according to claim 1, characterised in that said plate (16) has an essentially triangular perimeter and is shaped in such a way as to cover a portion of toothed arc of said third wheel (8) able to define a contrast to the axial stresses of said wheel (8), and in such a way as not to involve the meshing areas between said third wheels and said first and second gear wheel (3, 5).

3. Assembly according to claim 1, characterised in that said vacuum generating unit (15) comprises a rotor (18) splined onto said through shaft (14) and inserted within a chamber (19) obtained from a protruding cylindrical portion of said support body (11); said rotor (18) comprising a cylindrical body (20) fitted with a plurality of blades (21) able to create said vacuum; said cylindrical body (20) being provided, on its base surfaces, with a respective circumferential indentation (22a, 22b) defining a part of said means (17) for the passage of lubricant; said indentation (22a) provided on the outermost surface of said cylindrical body (20) being connected to a duct (23) for supplying said lubricating fluid coming from outside said support body (11).

4. Assembly according to claim 1, characterised in that said vacuum generating unit comprises a rotor (18) splined to said through shaft (14) and inserted within a chamber (19) obtained from a protruding cylindrical portion of said support body (11); said rotor (18) comprising a cylindrical body (20) on which are fitted a plurality of blades able to create said vacuum, and said support body (11) presenting, on the inner base (19b) of said cylindrical chamber (19), a plurality of first ducts (24), defining a part of said means allowing lubricant passage (17), extending to said surface (10) supporting said third wheel (8) and providing a passage for said lubricant coming from said generating unit (15).

5. Assembly according to claim 4, wherein each said first duct (24) is provided with an intake port (L) for the entry of said lubricant obtained in a given position on said inner base (19b) of said cylindrical chamber (19), characterised in that at least one of the values between said intake ports (L) and said position ofthe same on said inner base (19b) is such as to allow said ducts (24) to be always free and able to obtain the continuous flow of said lubricant regardless of the positions assumed by said rotor (18) as it rotates.

6. Assembly according to claim 1, characterised in that said support body (11) is provided with a plurality of first ducts (24), defining a part of said means allowing lubricant passage (17), extending from the area where said vacuum generating unit (15) is fitted to the exterior of said body (11) supporting said third wheel (8), uniformly distributed thereon, and in correspondence with a bevelled corner area presented by said surface (10) coupled to said shoulder (9) of said third wheel (8) and so as to distribute said lubricant on at least two directions forming essentially a right angle.

7. Assembly according to claim 6, characterised in that said third gear wheel (8) is fitted with a plurality of second ducts (25), defining a part of said means allowing lubricant passage (17), uniformly distributed on its inner circumference and extending from said shoulder (9) to reach the opposite surface, set opposite to a retaining plate (16), so as to distribute said lubricant, arriving from said first ducts (24), onto said third wheel (8) and onto said retaining plate (16).

## Patentansprüche

1. Vakuumpumpenzusammenbau für Brennkraftmaschinen, enthalten unter anderen Bestandteilen im Inneren eines hermetisch abgedichteten Motorblocks (1) eine Antriebswelle (2), verbunden mit wenigstens einem ersten Zahnrad (3), das auf die Welle selbst aufgezogen ist, eine Nockenwelle (4), angeordnet parallel zu der genannten Antriebswelle (2) und mit wenigstens einem zweiten Zahnrad (5) versehen, das auf die Nockenwelle selbst aufgezogen ist, und Mittel (6) zum Übertragen der Bewegung von der genannten Antriebswelle (2) auf die genannte Nockenwelle (4), die eine Vakuumerzeugungseinheit (15) enthalten; wobei Mittel (7) zur Verteilung von Schmierflüssigkeit innerhalb des genannten Motorblocks (1) vorgesehen sind, **dadurch gekennzeichnet,** dass die Bewegungsübertragungsmittel (6) wie folgt enthalten:
- ein drittes Übertragungszahnrad (8), eingesetzt zwischen dem genannten ersten und zweiten Zahnrad (3, 5) und in diese eingreifend, wobei das genannte dritte Zahnrad (8) seine Innenfläche entlang einer Achse parallel zu der eigenen Drehachse (X) in zwei unterschiedliche Abschnitte unterteilt aufweist, von welchen einer eine Schulter (9) beschreibt, die drehbar von einer entsprechenden runden Oberfläche (10) gehalten wird, die aus einem Körper (11) herausragt, der als Träger und zur teilweisen Aufnahme des dritten Zahnrades selbst dient, und der andere eine Innenverzahnung (12) aufweist, die sich verbindet mit
- einem vierten Zahnrad (13), das auf ein Ende einer Welle (14) aufgezogen ist, die durch den genannten Trägerkörper (11) verläuft und mit ihrem anderen Ende an die genannte Vakuumerzeugungseinheit (15) angeschlossen ist;
- eine Platte (16), welche das genannte dritte Zahnrad (8) an dem genannten Körper (11) hält, und gegenüberliegend der freien äusseren Fläche (8a) des genannten dritten Zahnrades (8) angeordnet ist und an dem Körper selbst befestigt werden kann, um eine Wand zum teilweisen Verschliessen des Körpers zu bilden, sowie
- Mittel (17) für den Durchlass der genannten Schmierflüssigkeit, erhalten an wenigsten dem genannten Trägerkörper (11), an dem genannten dritten Zahnrad (8) und an der genannten Vakuumerzeugungseinheit (15) und in der Lage, den kontinuierlichen Fluss der genannten Schmierflüssigkeit von dem genannten Körper (11), wo die genannte Vakuumerzeugungseinheit (15) angeordnet ist, in Richtung des genannten dritten Zahnrades (8) zu erlauben.

2. Zusammenbau nach Patentanspruch 1, **dadurch gekennzeichnet,** dass die genannte Platte (16) einen im wesentlichen dreieckigen Umriss aufweist und auf solche Weise geformt ist, dass sie einen Abschnitt eines Zahnbogens des genannten dritten Zahnrades (8) abdeckt, in der Lage, einen Widerstand gegen die axialen Belastungen des genannten Zahnrades (8) zu bilden, und auf solche Weise, dass die Verzahnungsbereiche zwischen dem genannten dritten Zahnrad und dem genannten ersten und zweiten Zahnrad (3, 5) nicht betroffen werden.

3. Zusammenbau nach Patentanspruch 1, **dadurch gekennzeichnet,** dass die genannte Vakuumerzeugungseinheit (15) einen Rotor (18) enthält, aufgezogen auf die genannten durchgehende Welle (14) und eingesetzt in eine Kammer (19), die aus einem hervorstehenden zylindrischen Abschnitt des genannten Trägerkörpers (11) erhalten ist; wobei der genannte Rotor (18) einen zylindrischen Körper (20) enthält, an dem eine Anzahl von Schaufeln (21) befestigt und der in der Lage ist, das genannte Vakuum zu erzeugen; wobei der genannte zylindrische Körper (20) an seinen Basisflächen mit einer entsprechenden, umlaufenden Vertiefung (22a, 22b) versehen ist, die einen Teil der genannten Mittel (17) für den Durchlass des Schmiermittels bilden; wobei die genannte, an der äussersten Fläche des genannten zylindrischen Körpers (20) vorgesehene Vertiefung (22a) an eine Leitung (23) zum Zuführen der genannten, von ausserhalb des genannten Trägerkörpers (11) kommenden Schmierflüssigkeit angeschlossen ist.

4. Zusammenbau nach Patentanspruch 1, **dadurch gekennzeichnet,** dass die genannte Vakuumerzeugungseinheit (15) einen Rotor (18) enthält, aufgezogen auf die genannten durchgehende Welle (14) und eingesetzt in eine Kammer (19), die aus einem hervorstehenden zylindrischen Abschnitt des genannten Trägerkörpers (11) erhalten ist; wobei der genannte Rotor (18) einen zylindrischen Körper (20) enthält, an dem eine Anzahl von Schaufeln (21) befestigt und der in der Lage ist, das genannte Vakuum zu erzeugen, und wobei der genannte Trägerkörper (11) an dem inneren Boden (19b) der genannten zylindrischen Kammer (19) eine Anzahl von ersten Leitungen (24) aufweist, die einen Teil der genannten Mittel (17) zum Durchlassen des Schmiermittels beschreiben, und die sich bis zu der genannten, das genannte dritte Zahnrad (8) haltenden Oberfläche (10) erstrecken und somit einen Durchlass für das genannte, aus der genannten Vakuumerzeugungseinheit (15) kommende Schmiermittel bilden.

5. Zusammenbau nach Patentanspruch 4, bei welchem jede genannte erste Leitung (24) mit einer Einlassöffnung (L) für den Eintritt des genannten Schmiermittels versehen ist, erhalten in einer bestimmten Position an dem genannten inneren Boden (19b) der genannten zylindrischen Kammer (19), **dadurch gekennzeichnet,** dass wenigstens einer der Werte zwischen den genannten Einlassöffnungen (L) und der genannten Position derselben an dem genannten inneren Boden (19b) solcher ist, dass es den genannten Leitungen (24) erlaubt wird, stets frei und in der Lage zu sein, den kontinuierlichen Fluss des genannten Schmiermittels aufzunehmen, und zwar unabhängig der von dem sich drehenden Rotor (18) eingenommenen Positionen.

6. Zusammenbau nach Patentanspruch 1, **dadurch gekennzeichnet,** dass der genannte Trägerkörper (11) mit einer Anzahl von ersten Leitungen (24) versehen ist, die einen Teil der genannten Mittel (17) zum Durchlassen des Schmiermittels beschreiben und sich von dem Bereich aus erstrecken, in welchem die genannte Vakuumerzeugungseinheit (15) sich mit dem Aussenbereich des genannten Körpers (11) verbindet, welcher das genannte dritte Zahnrad (8) trägt, gleichmässig an diesem verteilt und in einem, von der genannten Oberfläche (10) aufgewiesenen abgeschrägten Eckbereich mit der genannten Schulter (9) des genannten dritten Zahnrades (8) verbunden sind, um das genannte Schmiermittel in wenigstens zwei Richtungen zu verteilen, die im wesentlichen einen rechten Winkel bilden.

7. Zusammenbau nach Patentanspruch 6, **dadurch gekennzeichnet,** dass das genannte dritte Zahnrad (8) mit einer Anzahl von zweiten Leitungen (25) versehen ist, die einen Teil der genannten Mittel (17) zum Durchlassen des Schmiermittels beschreiben, gleichmässig an dessen innerem Umlauf verteilt sind und sich von der genannten Schulter (9) aus erstrecken, um die entgegengesetzte Oberfläche zu erreichen, die sich einer Halteplatte (16) gegenüberliegend befindet, so dass das genannte und von den genannten ersten Leitungen (24) kommende Schmiermittel an dem genannten dritten Zahnrad (8) und an der genannten Halteplatte (16) verteilt wird.

## Revendications

1. Assemblage de pompe à vide pour des moteurs à combustion interne comprenant, entre autres, à l'intérieur du bloc moteur (1) fermé hermétiquement, un arbre de transmission (2) sur lequel est clavetée au moins une première roue dentée (3), un arbre à cames (4) parallèle audit arbre de transmission (2) sur lequel est clavetée au moins une deuxième roue dentée (5), et des moyens (6) pour la transmission du mouvement entre ledit arbre de transmission (2) et ledit arbre à cames (4), comprenant une unité génératrice de vide (15) ; des moyens (7) pour la distribution du fluide de lubrification à l'intérieur dudit bloc moteur (1), **caractérisé en ce que** lesdits moyens de transmission du mouvement (6) comprennent :
- une troisième roue dentée (8) de transmission en prise avec lesdites première roue dentée (3) et deuxième roue dentée (5) et située entre celles-ci, ladite troisième roue dentée (8) ayant sa surface interne subdivisée, le long d'un axe parallèle à son axe de rotation (X), en deux parties bien distinctes dont l'une définit un épaulement (9) tournant supporté par une surface ronde (10) en saillie d'un corps (11) supportant et abritant partiellement la troisième roue dentée, et l'autre présentant une denture intérieure (12) en prise avec
- une quatrième roue dentée (13) clavetée à une extrémité d'un arbre (14) traversant ledit corps de support (11) et relié à l'autre extrémité à ladite unité génératrice de vide (15) ;
- une plaque (16) de retenue de ladite troisième roue dentée (8) sur ledit corps (11), située en face de la surface externe libre (8a) de ladite troisième roue dentée (8) et pouvant être fixée audit corps pour définir une paroi de fermeture partielle dudit corps, et
- des moyens (17) pour le passage dudit fluide de lubrification, réalisés au moins sur ledit corps de support (11), sur ladite troisième roue dentée (8) et sur ladite unité génératrice de vide (15), et en mesure d'assurer l'écoulement continu dudit fluide de lubrification entre ledit corps (11), depuis l'endroit où ladite unité génératrice de vide (15) est montée, et ladite troisième roue dentée (8).

2. Assemblage selon la revendication 1, **caractérisé en ce que** ladite plaque (16) a un périmètre essentiellement triangulaire et une forme telle qu'elle couvre une portion d'arc denté de ladite troisième roue (8) en mesure de fournir un contraste aux forces axiales exercées sur ladite roue (8), et de manière à ne pas impliquer les zones de prise entre ladite troisième roue et lesdites première et deuxième roues dentées (3,5).

3. Assemblage selon la revendication 1, **caractérisé en ce que** ladite unité génératrice de vide (15) comprend un rotor (18) claveté sur ledit arbre traversant (14) et est introduite à l'intérieur d'une chambre (19) obtenue à partir d'une portion cylindrique en saillie dudit corps de support (11) ; ledit rotor (18) comprenant un corps cylindrique (20) doté d'une série de palettes (21) en mesure de générer ledit vide ; ledit corps cylindrique (20) étant doté, sur la circonférence de ses surfaces de base, d'un renfoncement (22a, 22b respectivement) définissant une partie desdits moyens (17) de passage du lubrifiant ; ledit renfoncement (22a) situé sur la surface externe dudit corps cylindrique (20) étant relié à une conduite (23) d'alimentation dudit fluide de lubrification provenant de l'extérieur dudit corps de support (11).

4. Assemblage selon la revendication 1, **caractérisé en ce que** ladite unité génératrice de vide (15) comprend un rotor (18) claveté sur ledit arbre traversant (14) et introduit à l'intérieur d'une chambre (19) obtenue à partir d'une portion cylindrique en saillie dudit corps de support (11) ; ledit rotor (18) comprenant un corps cylindrique (20) sur lequel est montée une série de palettes en mesure de générer ledit vide, et ledit corps de support (11) présentant, sur la base intérieure (19b) de ladite chambre cylindrique (19), une série de premières conduites (24) définissant une partie desdits moyens de passage (17) du fluide de lubrification, allant de ladite surface (10) supportant ladite troisième roue dentée (8) et formant un passage pour ledit fluide de lubrification provenant de ladite unité génératrice de vide (15).

5. Assemblage selon la revendication 4, où chaque première conduite (24) est dotée d'un orifice d'entrée (L) pour l'entrée dudit fluide de lubrification situé dans une position donnée sur ladite base intérieure (19b) de ladite chambre (19), et **caractérisé en ce qu'**au moins l'une des valeurs entre lesdits orifices d'entrée (L) et ladite position de ces derniers sur ladite base intérieure (19b) est telle que lesdites conduites (24) sont toujours libres de recevoir le flux continu dudit fluide de lubrification, indépendamment de la position du rotor (18) pendant sa rotation.

6. Assemblage selon la revendication 1, **caractérisé en ce que** ledit corps de support (11) est doté d'une série de premières conduites (24), définissant une partie desdits moyens de passage (17) du fluide de lubrification et allant de la zone où est montée ladite unité génératrice de vide (15) jusqu'à l'extérieur dudit corps (11) de support de ladite troisième roue dentée (8), uniformément distribuées sur celle-ci, et en correspondance d'une zone d'angle chanfreinée de ladite surface (10) accouplée audit épaulement (9) de ladite troisième roue dentée (8) et de manière à distribuer ledit lubrifiant dans au moins deux directions essentiellement disposées à angle droit.

7. Assemblage selon la revendication 6, **caractérisé** **en ce que** ladite troisième roue dentée (8) est dotée d'une série de secondes conduites (25), définissant une partie desdits moyens (17) permettant le passage du lubrifiant, uniformément distribuées sur sa circonférence intérieure et allant dudit épaulement (9) jusqu'à la surface opposée, située en face d'une plaque de retenue (16), de manière à distribuer ledit lubrifiant, provenant desdites premières conduites (24), sur ladite troisième roue dentée (8) et sur ladite plaque de retenue (16).
